# EUROPEAN PATENT APPLICATION

(11) **EP 1 816 064 A2**
(43) Date of publication of application: **08.08.2007**
(21) Application number: 06125043.7
(22) Date of filing: 29.11.2006
(51) Int. Cl.: B62M 9/12

(54) **Bicycle derailleur**

(30) Priority: 03.02.2006 JP 2006027217
(71) Applicant: SHIMANO INC., Osaka 590-8577 (JP)
(72) Inventor: Fukuda, Masahiko c/o SHIMANO INC., Sakai City, Osaka 590-8577 (JP)
(74) Representative: Intes, Didier Gérard André

(57) **Abstract**

A bicycle derailleur (97r) is provided with a base member (12r), a movable member (13r), a linkage (16r), a chain guide (14r), an operating mechanism (15r) and an adjustment mechanism (17r). The chain guide guides the chain (95). The movable member is a member that is used to support the chain guide. The linkage (16r) is pivotally connected at both ends to the base member (12r) and the operating member (15r). The operating member causes the linkage to rotate. The adjustment mechanism (17r) is disposed between the linkage (16r) and operating member (15r) for adjusting the movement of the linkage.

## Description

### BACKGROUND OF THE INVENTION

### Field of the Invention

This invention generally relates to a bicycle derailleur. More specifically, the present invention relates to a bicycle derailleur which can be mounted on the frame of a bicycle, and which guides a chain to any of a plurality of sprockets.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle drive train.

Currently, many bicycles are equipped with externally mounted gearshift devices called derailleurs that are also more generically known as gearshift devices. In these gearshift devices, the shifting of gears is accomplished by guiding a chain to one of a plurality of front or rear sprockets. In a derailleur of this type, the distance between the sprockets and the chain guide of the derailleur may fluctuate depending on the frame. An adjustment mechanism which adjusts the position of the chain guide in the direction in which the chain guide approaches or moves away from the frame is disposed on the derailleur (for example, see Japanese Unexamined Patent Application No. 2001-225785).

Typically, a conventional derailleur has a base member configured to be mounted on a bicycle frame, a chain guide that guides a bicycle chain, a movable member that swingably supports the chain guide, and a link mechanism with opposite ends being pivotally connected to the base member and the movable member. Also most conventional derailleurs include an adjustment mechanism that is disposed on the base member or the movable member to control the range of movement of the chain guide.

In the case of a derailleur with an adjustment mechanism on the movable member, the movable member has a connecting member connected to the link mechanism, and a supporting member mounted inside the connecting member so that this supporting member is free to move in the axial direction approaching and moving away from the frame. This supporting member also supports the chain guide so that the chain guide can rotate about the axis. The connecting member has a first tubular part, while the supporting member has a second tubular part which is mounted on the first tubular part so that the second tubular part is capable of movement in the axial direction but incapable of rotation. The adjustment mechanism is disposed between the first tubular part and the second tubular part. The adjustment mechanism is also disposed so that this adjustment mechanism can adjust the position of the supporting member in the axial direction with respect to the connecting member. In particular, two projecting parts are provided which are disposed facing the first tubular part and the second tubular part. The projecting parts have female screw holes that have different screw directions. The position in the axial direction is adjusted by turning a bolt member having two male screws that are threadedly engaged with these female screw holes.

In a derailleur having the abovementioned conventional adjustment mechanism, in order to provide an adjustment mechanism for adjusting the position of the chain guide, a movable member is constructed with a connecting member having a first tubular part, and a supporting member having a second tubular part. Furthermore, since screws having different screw directions must be formed, screw formation is difficult. Accordingly, the construction of the movable member is complicated, which may lead to an increase in the cost of the derailleur as a whole.

In view of the above, it will be apparent to those skilled in the art from this disclosure that there exists a need for an improved bicycle derailleur. This invention addresses this need in the art as well as other needs, which will become apparent to those skilled in the art from this disclosure.

### SUMMARY OF THE INVENTION

One object of the present invention is to provide a bicycle derailleur that has an adjustment mechanism that is relatively easy to manufacture.

The foregoing object can basically be attained by providing a bicycle derailleur that basically includes a base member, a linkage, a movable member, a chain guide, an operating member and an adjustment mechanism in accordance with a first aspect of the present invention. The base member is configured to be mounted on a bicycle. The linkage is pivotally coupled to the base member to pivot between at least a pair of gearshift positions relative to the base member. The movable member is pivotally coupled to the linkage to be moved by the linkage between the gearshift positions. The chain guide is coupled to the movable member to move with the movable member between the gearshift positions. The operating member is operatively coupled to the linkage to selectively pivot the linkage. The adjustment mechanism is operatively coupled between the linkage and the operating member to adjust an angular position of the linkage relative to the operating member.

In this derailleur, when the position of the chain guide is adjusted, the angular or rotational position of the linkage (one or more link members) is adjusted by the adjustment mechanism that is disposed between the operating member and linkage. When the angular position of the linkage is adjusted, the position of the movable member in the direction moving toward and away from the frame varies, so that the position of the chain guide in the direction moving toward and away from the frame can be adjusted. Here, since the position of the chain guide can be adjusted by adjusting the angular position of the linkage between the operating member and the linkage, the positional adjustment of the chain guide can be accomplished by means of a simple construction. Furthermore, since the linkage is caused to pivot by the operating member, positional adjustment of the chain guide can be accomplished regardless of electric shifting by a motor or shifting by a gearshift cable.

According to a second aspect of the present invention, the bicycle derailleur of the present invention can be provided such that the operating member includes a base part that is rotatably connected to the base member, and an operating part that pivots the linkage. In this case, the derailleur can be electrically or mechanically driven by connecting the base part to an electric drive or a gearshift cable.

According to a third aspect of the present invention, the bicycle derailleur of the present invention can be provided such that the operating member has a pivot axis that is coincident with a pivot axis of the linkage, so that the rotational supporting mechanism is simplified.

According to a fourth aspect of the present invention, the bicycle derailleur of the present invention can be provided such that the adjustment mechanism includes a screw that is threadedly engaged with one of the operating member and the linkage to contact the other of the operating member and the linkage in order to adjust the angular position of the linkage by advancing and retracting the screw. In this case, an adjustment mechanism can be realized merely by installing a screw member. Accordingly, the structure of the adjustment mechanism is further simplified.

According to a fifth aspect of the present invention, the bicycle derailleur of the present invention can be provided such that the operating part includes a first operating part and a second operating part, with the first operating part being configured and arranged to pivot the linkage in a first rotational direction, and the second operating part being configured and arranged to pivot the linkage in a second rotational direction via a connecting member that is connected to the linkage. Accordingly, the linkage can be caused to rotate in both directions merely by causing the first operating part to contact the linkage from one direction without connecting the first operating part to the linkage, so that the an even simpler adjustment mechanism can be realized.

According to a sixth aspect of the present invention, the bicycle derailleur of the present invention can be provided such that the connecting member includes a spring member that is configured and arranged to urge the second operating part in the first rotational direction. In this case, the second operating part can be realized by means of a simple construction.

According to a seventh aspect of the present invention, the bicycle derailleur of the present invention can be provided such that the screw member is threadedly engaged with the linkage, and contacts the first operating part of the operating member. In this case, when the operating part is turned in the direction in which the screw member is tightened, the screw member contacts the first operating part, and the linkage rotates in the first direction. When this part is turned in the loosening direction, the linkage rotates in the second direction.

According to an eighth aspect of the present invention, the bicycle derailleur of the present invention can be provided such that the base member includes an electric drive part with a motor for driving the operating member. In this case, in an electrically driven derailleur in which the gearshift position is set beforehand, the gearshift position can be set in an optimal fashion.

According to a ninth aspect of the present invention, the bicycle derailleur of the present invention can be provided such that the operating member includes a gearshift cable attachment structure for rotating the operating member by a gearshift cable. In a derailleur which is operated by a gearshift cable, the gearshift position can be adjusted in an optimal fashion.

In the present invention, the position of the chain guide can be adjusted by adjusting the angular position of the linkage between the operating member and the linkage. Accordingly, the positional adjustment of the chain guide can be accomplished by means of a simple construction. Furthermore, since the linkage can be caused to rotate by the operating member, the positional adjustment of the chain guide can be accomplished regardless of electric shifting by a motor or shifting by a gearshift cable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:

Figure 1 is a right side elevational view of a bicycle using a bicycle derailleur in accordance with one embodiment of the present invention;

Figure 2 is an enlarged, partial side elevational view around the rear end of the bicycle illustrated in Figure 1 to show with the rear sprockets and the rear derailleur in accordance with one embodiment of the present invention;

Figure 3 is a plan view of the base member of the rear derailleur in which the cover has been removed from the base member;

Figure 4 is an exploded perspective view of the link mechanism of the rear derailleur;

Figure 5 is a simplified diagrammatic view of the link mechanism of the rear derailleur showing the operation of the link mechanism of the rear derailleur;

Figure 6 is a simplified diagrammatic view of the link mechanism of the rear derailleur showing the operation of the link mechanism of the rear derailleur;

Figure 7 is a simplified diagrammatic view of the link mechanism of the rear derailleur showing the operation of the link mechanism of the rear derailleur;

Figure 8 is a simplified diagrammatic view of the link mechanism of the rear derailleur showing the operation of the link mechanism of the rear derailleur;

Figure 9 is a diagram showing the operation of the link mechanism of the rear derailleur; and

Figure 10 is a simplified diagrammatic view (corresponding to Figure 5) of the link mechanism of the rear derailleur showing the operation of the link mechanism of the rear derailleur in accordance with one embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

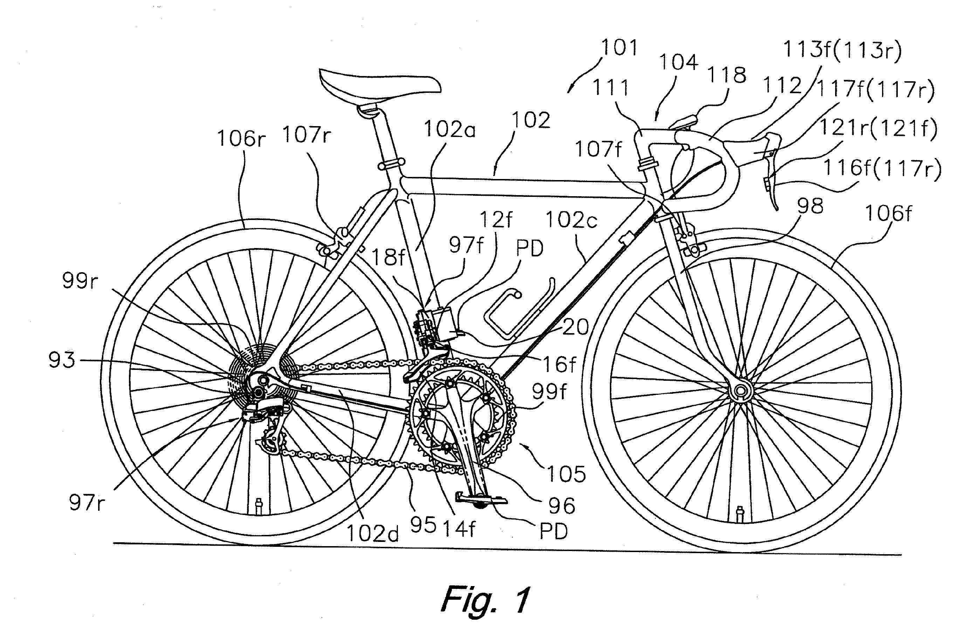

Referring initially to Figure 1, a bicycle 101 is illustrated in accordance with a first embodiment of the present invention. As seen in Figure 1, the bicycle 101 is a "road racer" (racing style road bike) that basically includes a diamond shaped frame 102, a handlebar unit 104, a drive unit 105, a pair of front and rear wheels 106f and 106r, a pair of front and rear brake devices 107f and 107r and a variable speed gearshift device 110. The diamond shaped frame 102 has a front fork 98 to which the handlebar unit 104 is fastened. The drive unit 105 basically includes a chain 95, a crank 96 with a pair of pedals PD, a pair of front and rear derailleurs 97f and 97r, a pair of front and rear sprocket sets 99f and 99r, and other conventional components. The front and rear wheels 106f and 106r are installed on the front fork 98 and the rear side of the frame 102, respectively, as seen in Figure 1.

As seen in Figure 1, the handlebar unit 104 includes a handlebar stem 111, and a handlebar 112 fixedly coupled to the upper end of the handlebar stem 111. The handlebar stem 111 is fixedly coupled to an upper end of the front fork 98. The handlebar 112 is a drop handle type handlebar equipped with left and right brake levers 113f and 113r for operating the front and rear brake devices 107f and 107r, respectively. The brake lever 113f is disposed at the right end part of the handlebar 112, and the brake lever 113r is disposed at the left end part when the bicycle 101 is viewed from behind.

The front brake lever 113f has a front lever member 116f and a front brake bracket 117f. The front brake bracket 117f is mounted on one the end of the handlebar 112, with the front lever member 116f pivotally mounted on the front brake bracket 117f so as to be pivoted relative to the handlebar 112. Similarly, the rear brake lever 113r has a rear lever member 116r and a rear brake bracket 117r. The rear brake bracket 117r is mounted on the opposite end of the handlebar 112 from the front brake lever 113f, with the rear lever member 116r pivotally mounted on the rear brake bracket 117r so as to be pivoted relative to the handlebar 112. Front and rear gearshift operating parts 121f and 121r of the front and rear derailleurs 97f and 97r are disposed separately on the rear surfaces of the lever members 116f and 116r.

Furthermore, as seen in Figure 1, a speed display element 118 is disposed in a center part of the handlebar 112 for displaying bicycle speed, running distance, and/or shift position of the bicycle 101.

Front and rear transmission (derailleur) operating devices 121f and 121r are mounted separately on the back surface of the lever members 116f and 116r, respectively. The front and rear transmission operating devices 121f and 121r are used for performing the gear shifting operations of the front and rear derailleurs 97f and 97r, respectively. Specifically, the transmission operating device 121f for the front derailleur 97f is provided on the lever member 116r that initiates the braking operation of the rear brake device 107r, and the transmission operating device 121r for the rear derailleur 97r is provided on the lever member 116f that initiates the braking operation of the front derailleur 97f.

As was described above, the drive unit 105 includes the chain 95, the derailleurs 97f and 97r which shift the chain 95, and the front and rear sprocket sets 99f and 99r. The front derailleur (FD) 97f is an electrically controllable electrically-driven derailleur that guides the chain 95 among a plurality gearshift or transmission positions (e.g., two gearshift positions in the illustrated embodiment). The front derailleur 97f basically includes a mounting or base member 12f, a chain guide 14f, a four bar link mechanism 16f and an electric drive part 18f. The base member 12f is attached to a seat tube 102a of the frame 102. The chain guide 14f is movable in directions approaching and retracting from the base member 12f. The link mechanism 16f pivotally connects the base member 12f and the chain guide 14f together. The electric drive part 18f is configured and arranged for driving the chain guide 14f via the link mechanism 16f. In the illustrated embodiment, a power supply 20 is attached to the electric drive part 18f. The power supply 20 is configured and arranged to supply power to the electric drive part 18f and other electrical devices.

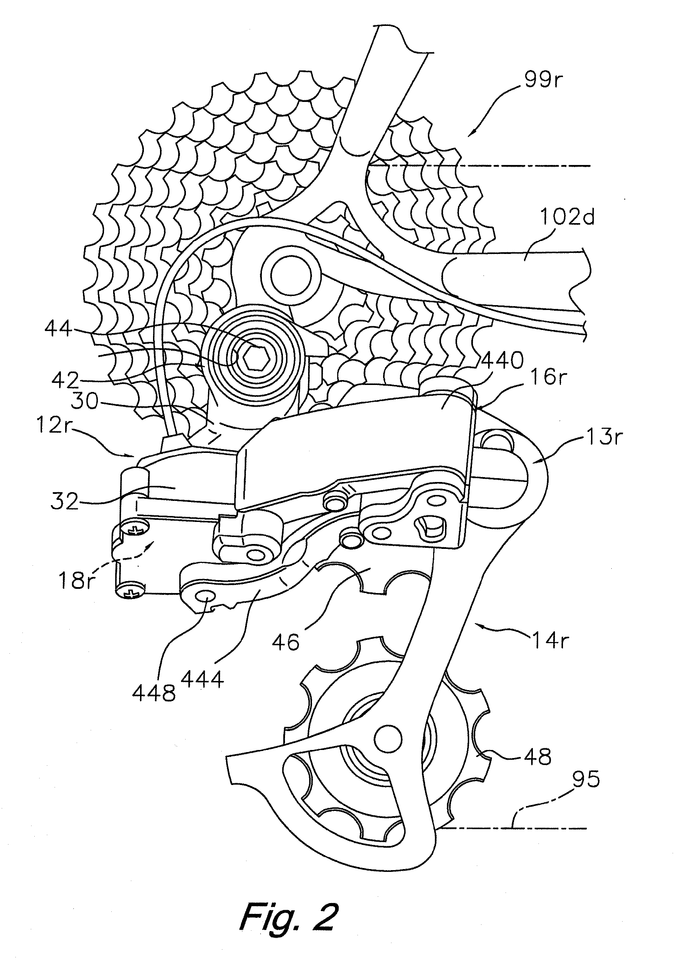

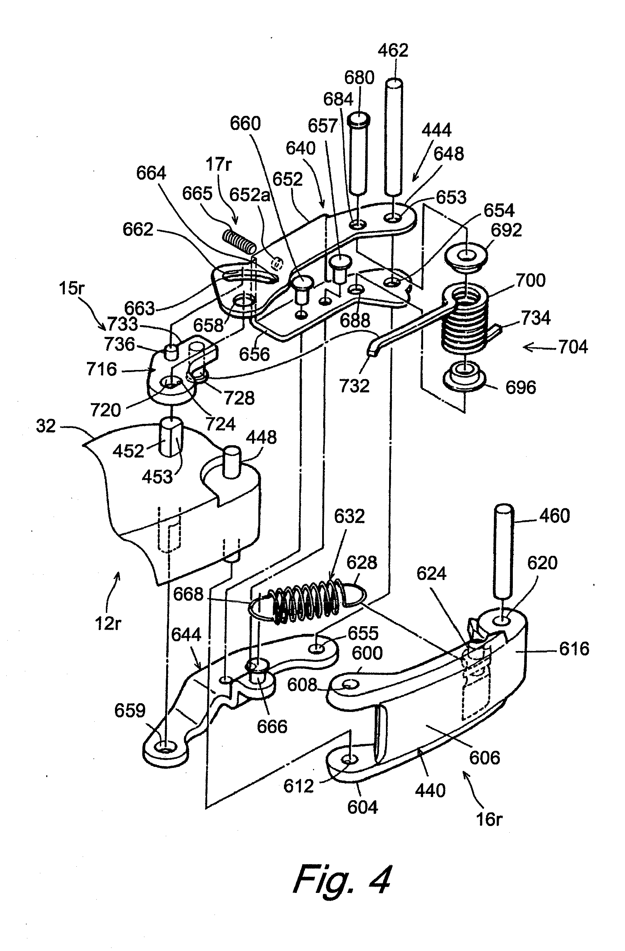

As shown in Figures 2 through 4, the rear derailleur (RD) 97r is one example of the bicycle derailleur of the present invention. The rear derailleur 97r is an electrically controlled electrically driven derailleur that guides the chain 95 to one of a plurality of transmission or gearshift positions (e.g., nine gearshift positions is shown in the illustrated embodiment). The rear derailleur 97r includes a mounting or base member 12r attached to the rear part of a chain stay 102d of the frame 102, a chain guide 14r that is movable relative to the base member 12r, a link mechanism or linkage 16r pivotally connecting the base member 12r and the chain guide 14r together, and an electric drive part 18r for driving the chain guide 14r via the link mechanism 16r. Furthermore, as shown in Figure 4, the rear derailleur 97r further includes an operating mechanism or member 15r and an adjustment mechanism 17r. The operating mechanism or member 15r is configured and arranged to move the link mechanism 16r in response to operation of the electric drive part 18r. The adjustment mechanism 17r is disposed between the link mechanism 16r and the operating member 15r. The adjustment mechanism 17r is configured and arranged to adjust the rotational position or pivotal range of the link mechanism 16r.

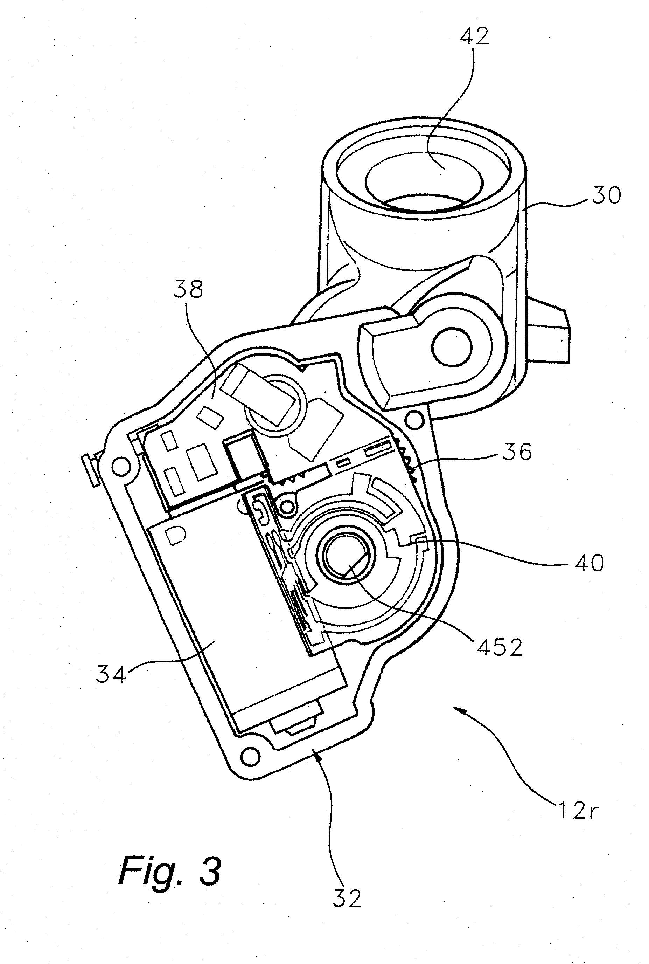

As seen in Figure 2, the base member 12r has a frame mounting portion 30, and a drive housing 32 for housing the electric drive part 18r. Thus, the electric drive part 18r is integrated into the base member 12r. In particular, as shown in Figure 3, the drive housing 32 accommodates an electric motor 34 of the electric drive part 18r, a deceleration mechanism 36 for decelerating the rotation of the motor 34, a gearshift control circuit for controlling speed changes of the motor 34, and a gearshift position sensor for detecting the gearshift position. The gearshift control circuit 38 has a gearshift control part (not shown in the figures) based on a microcomputer. The motor 34 is controlled in accordance with upshifting and downshifting signals that are output to the gearshift control part from the gearshift operating part 121r. Thus, the electric drive part 18r is configured and arranged to cause the operating mechanism 15r to rotate by operation of the electric motor 34, which in turn moves the link mechanism 16r to move the chain guide 14r.

The frame mounting portion 30 includes a bolt mounting opening part 42. The base member 12r is fastened to the rear part of the chain stay 102d in a manner that allows adjustment of the rotational position about a frame mounting bolt 44 that passes through the bolt mounting opening part 42 as seen in Figure 2.

The chain guide 14r rotatably supports a guide pulley 46 for guiding the chain 95 so that the chain engages with a selected sprocket of the rear sprocket set 99r, and a tension pulley 48 for applying tension to the chain 95.

The link mechanism 16r is rotatably connected to the movable member 13r. The movable member 13r is swingably connected to the chain guide 14r. Furthermore, an urging member (not shown in the figures) that includes, for example, a torsion coil spring and that drives the chain guide 14r in the clockwise direction in Figure 2 is disposed between the movable member 13r and the chain guide 14r.

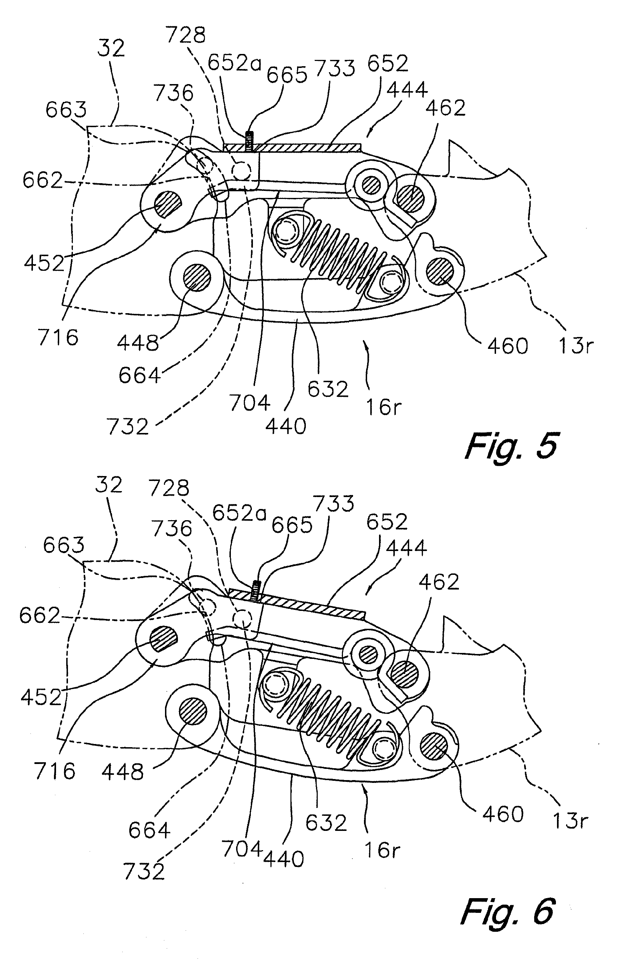

As shown in Figures 4 and 5, the link mechanism or linkage 16r includes a first link member 440 and a second link member 444. Thus, the link mechanism or linkage 16r includes one or more link members, with the illustrated embodiment using two link members. The first link member 440 has one end swingably connected to the drive housing 32 of the base member 12r, and a second link member 444 which is caused to rotate on the inside of the first link member 440 by the operating mechanism 15r. Both link members 440 and 444 are disposed substantially parallel to each other.

The first and second link members 440 and 444 are rotatably connected to the drive housing 32 via a pair of respective pivot shafts 448 and 452. The other ends of the first and second link members 440 and 444 are rotatably connected to the movable member 13r via a pair of respective corresponding pivot shafts 460 and 462. As will be described in detail below, the motor 34 causes the pivot shaft 452 to rotate. This rotation of the pivot shaft 452 causes the link member 444 to move, which in turn moves the movable member 13r and the chain guide 14r in the transverse direction so that the chain 95 moves among the sprockets of the sprocket set 99r.

The first link member 440 includes a pair of attachment tabs 600 and 604 and an attachment cylinder 616. The attachment tabs 600 and 604 extend from one end of the side wall 606 and are disposed with a gap left in between, and an attachment cylinder 616 that extends from the other end of the side wall 606. The attachment tabs 600 and 604 have holes 608 and 612, respectively, through which the pivot shafts 448 pass. The attachment cylinder 616 holds the first end 628 of the coil spring 632 is disposed in close proximity to the attachment cylinder 616 on the inside of the side wall 606.

The second link member 444 includes a first link plate 640 and a second link plate 644. The first link plate 640 has a U shape that is formed by an upper wall 648, a side wall 652 and a bottom wall 656. The bottom wall 656 is fastened to the second link plate 644 by a pair of rivets 657 and 660. Substantially circular holes 658 and 659 are formed in one end of the upper wall of the first link plate 640 and one end of the second link plate 644. The pivot shaft 452 is passed through the holes 658 and 659 so that the first link plate 640 and the second link plate 644 can rotate about the pivot shaft 459. Similarly, corresponding holes 653 and 654 are formed in the other ends of the upper wall 653 and the bottom wall 654, and a separate hole 655 is also formed in the other end of the second link plate 644. For reasons that will be described below, an arcuate slot 662 is provided for forming a pair of link member contacting parts 663 and 664. The arcuate slot 662 is formed in close proximity to the hole 658 in the upper wall 648.

A spring anchoring member 666 is disposed in an intermediate part of the second link plate 644 so as to hold the second end 668 of the spring 632. The spring 632 functions to accommodate the play of the speed reduction mechanism 36. A torsion coil spring 704 is one example of a connecting member, which is stopped by a spring shaft 680. The torsion coil spring 704 is disposed between the upper wall 648 and the bottom wall 656. The spring shaft 680 passes through the respective holes 684 and 688 in the walls 648 and 656. The spring shaft 680 is supported in the respective holes 684 and 688 in the walls 648 and 656 by upper and lower bushings 692 and 696. The spring shaft 680 also passes through a coil part 700 of the torsion coil spring 704 that is disposed between the bushings 692 and 696. The torsion coil spring 704 has a first end 732 and a second end 734. The second end 734 of the torsion coil spring 704 is configured and arranged to contact the pivot shaft 462.

The adjustment mechanism 17r includes adjustment screw 665 and a screw hole 652a that is formed in one end of the side wall 652 of the second link plate 644. The adjustment screw 665 is threadedly engaged in the screw hole 652a. The tip end of the adjustment screw 665 contacts the operating mechanism 15r as described later.

In particular, the operating mechanism 15r has an operating arm 716 which is mounted rotatably as a unit with the pivot shaft 452 which is connected with the base member 12r. A hole 720 is formed in the base end part of the operating arm 716. The pivot shaft 452 passes through the hole 720. The hole 720 has a flat surface 724 in contact with a flat surface 453 of the pivot shaft 452 so that the operating arm 716 does not undergo relative rotation. A columnar spring contact part 728 is one example of a second operating part that protrudes downward so as to contact the first end 732 of the coil spring 704. When the operating arm 716 is caused to rotate in the clockwise or second direction of the pivot shaft 452, the spring contact part 728 causes the second link member 444 to rotate in the clockwise direction via the torsion coil spring 704 connected to the second link member 444. The operating arm 716 is urged by the torsion coil spring 704 in a first or counterclockwise direction of the pivot shaft 452 such that a distal end 733 of the operating arm 716 comes into contact with the side wall 652 of the second link plate 644. Furthermore, the contact part of the operating arm 716 has the shape of the operation-regulating pin 736 which extends upward from the operating arm 716. The operation-regulating pin 736 fits into a slot 662 located in the upper wall 648 of the first link plate 640 after the rear derailleur 97r is assembled. The distal end 733 of the operating arm 716, which is one example of the first operating part, is contacted by the adjustment screw 665.

Figure 5 shows the first and second link members 440 and 444, the torsion coil spring 704, and the operating arm 716 as being in a neutral state. In this neutral state, the distal end 733 of the operating arm 716 is urged towards the side wall 652 by the urging force of the torsion coil spring 704 that applies pressure to the spring contact part 728. In this state, the operation-regulating pin 736 is separated from the link member contacting parts 663 and 664. It is assumed that the movable member 13r does not encounter excessive resistance against moving in the transverse direction.

When the pivot shaft 452 and the operating arm 716 rotate in the clockwise direction in Figure 5, the spring contact part 728 on the operating arm 716 applies pressure to the first end 732 of the coil spring 704. Thus, the urging force of the coil spring 704 is transmitted to the second link member 444 via the spring shaft 680, such that the first and second link members 440 and 444 rotate in a clockwise direction around the pivot shafts 448 and 452. Accordingly, the movable member 13r and the chain guide 14r also moved to the state shown in Figure 6.

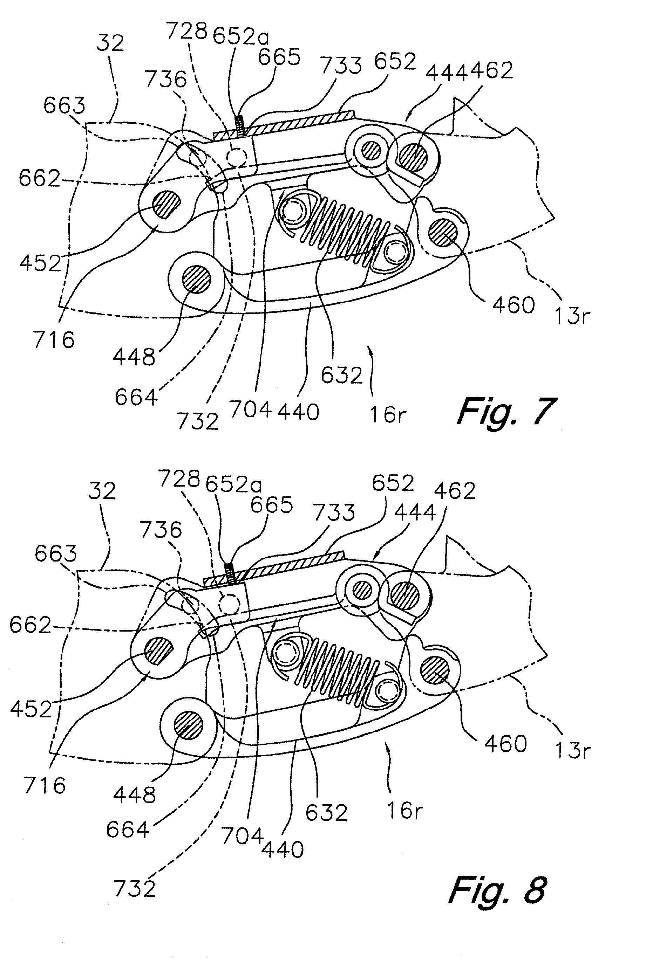

When the pivot shaft 452 rotates in a counterclockwise direction of Figure 5, the distal end 733 of the operating arm 716 contacts the adjustment screw 665. Thus, the force of the operating arm 716 is transmitted to the side wall 652 of the second link member 444 via the adjustment screw 665, the first and second link members 440 and 444 rotate in a counterclockwise direction around the pivot shafts 448 and 452, and the movable member 13r also moves accordingly to the state shown in Figure 7.

When the adjustment screw 665 is rotated so as to be screwed in, the distal end of the adjustment screw 665 applies pressure to the operating arm 716. Thus, the first and second link members 440 and 444 rotate in a counterclockwise direction in Figure 5 around the pivot shafts 448 and 452, and the movable member 13r also moves accordingly to the state shown in Figure 8. Thereby, if the distance between the frame 102 and the sprocket set 99r changes, then the position of the chain guide 14r can be adjusted according to this change.

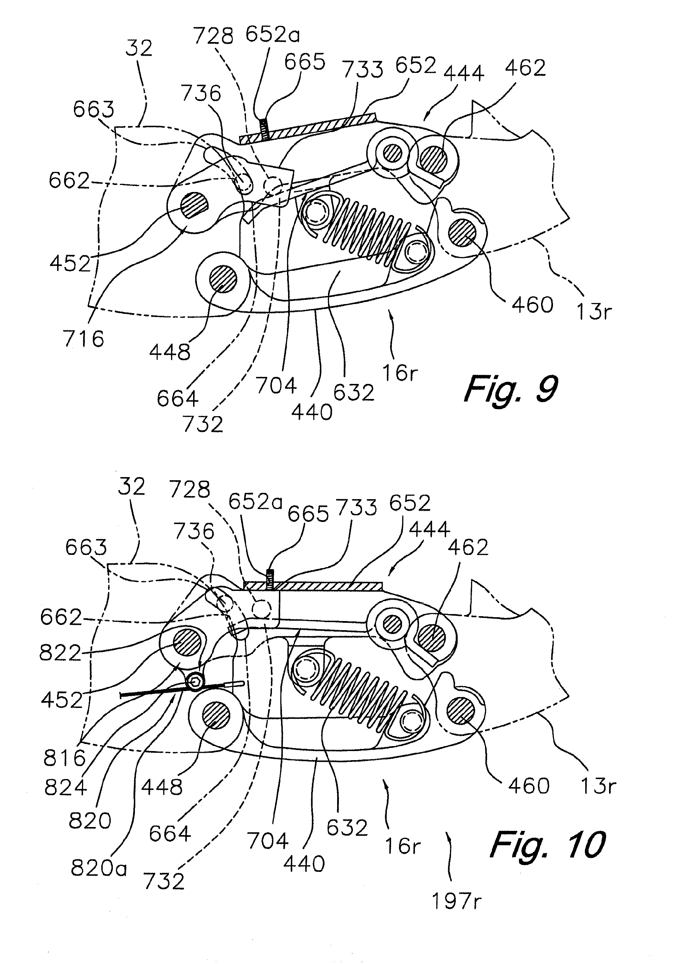

Also, in this embodiment, the deflection of the coil spring 704 is used to ensure that unnecessary force does not act on the motor 34. Specifically, in cases in which external force (inwardly directed external force) acts to bring the chain guide 14r or the movable member 13r closer to the frame 102, the link members 440 and 444 rotate in a counterclockwise direction around the pivot shafts 448 and 452 if, for example, the inwardly directed external force occurs in the state shown in Figure 6 and the movable member 13r moves toward the frame in the manner shown in Figure 9. The operating arm 716 cannot rotate counterclockwise to any significant degree because it is prevented from rotating in relation to the pivot shaft 452. As shown in Figure 9, the first end 732 of the coil spring 704 is moved in a counterclockwise direction, the coil spring 704 is wound around the spring shaft 680, and the second end 734 of the coil spring 704 is brought into contact with the pivot shaft 462 so that the force is maintained until the external force is withdrawn from the movable member 13r to prevent the motor 34 from being damaged. As previously described, the counterclockwise rotation of the operating arm 716 of the second link member 444 is regulated by the contact between the operation-regulating pin 736 and the contact part 664 of the slot 662, whereby the operating arm 716 can be securely prevented from separating from the coil spring 704. After the external force is withdrawn from the movable member 13r, the movable member 13r moves away from the frame 102 (downward in Figure 9), and the first and second link members 440 and 444 rotate clockwise around the pivot shafts 448 and 452 until the distal end 733 of the operating arm 716 again comes to be held between the first end 732 of the coil spring 704 and the side wall 652. Therefore, excessive force does not act on the motor 34 even when an inwardly directed external force acts on the movable member 13r.

Similarly, the torsion coil spring 704 also flexes and acts to ensure that excessive force is not exerted on the motor 34 in cases in which the movable member 13r is subjected to an excessive amount of resistance against movement in the direction away from the frame 102 (downward in Figure 5) to make the link mechanism 16r incapable of moving.

The position of the chain guide 14r can herein be adjusted with a simple configuration because the position of the chain guide 14r can be adjusted by adjusting the rotational position of the second link member 444 between the operating arm 716 and the second link member 444. Also, the position of the chain guide 14r can be adjusted without any electric shifting by the motor 34 or any shifting by a gearshift cable, because the link members are rotated by the operating arm 716.

In the previous embodiments, the present invention was described with reference to an electric rear derailleur, but the present invention is not limited to an electric derailleur and can also be applied to a mechanical derailleur 197r in which the gears are shifted with a Bowden shifting cable 820 as seen in Figure 10. The mechanical derailleur 197r is identical to the electric rear derailleur 97r, except that the electric drive part 18r has been eliminated to rotate the shaft 452. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

In cases in which the rear derailleur 197r is shifted with a shifting cable, an operating arm 816 can be provided with an inner interlocking part 822 that interlocks with an inner cable 820a of a Bowden shifting cable 820, as shown in Figure 10. The inner interlocking part 822 extends from the rotational center of the operating arm 816 in a different direction than the distal end 733, and the fixing bolt 824 is screwed into the distal end of the interlocking part. The distal end of the inner cable 820a is fixed with the threaded portion of the fixing bolt 824 by a washer or another such member.

With a rear derailleur 197r operated using the shifting cable 820 of this embodiment, the rotational position of the second link member 444 changes in relation to the operating arm 816 when the adjustment screw 665 is screwed in, and the position of the chain guide 14r in the axial direction can be adjusted in the same manner as in the previous embodiments.

In the previous embodiments, the present invention was described using a rear derailleur as an example, but the present invention can also be applied to a front derailleur. Even with a front derailleur, the operating arm can be brought into contact with the link members, and an adjustment mechanism can be provided between the operating arm and the link members.

In the previous embodiments, the configuration was designed such that the adjustment screw 665 was screwed into the second link member 444 to adjust the rotational position of the second link member 444, but another possibility is to adjust the rotational position by screwing an adjustment screw into the operating arm to apply pressure to the link member.

In the previous embodiments, the adjustment mechanism was configured from an adjustment screw, but the present invention is not limited thereto. For example, the adjustment mechanism can also be configured from a cam mechanism or the like.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle derailleur (97r) comprising:
a base member (12r) configured to be mounted on a bicycle, **characterized in that** it further comprises :
a linkage (16r) pivotally coupled to the base member (12r) to pivot between at least a pair of gearshift positions relative to the base member;
a movable member (13r) pivotally coupled to the linkage (16r) to be moved by the linkage (16r) between the gearshift positions;
a chain guide (14r) coupled to the movable member (13r) to move with the movable member between the gearshift positions;
an operating member (15r) operatively coupled to the linkage (16r) to selectively pivot the linkage; and
an adjustment mechanism (17r) operatively coupled between the linkage (16r) and the operating member (15r) to adjust an angular position of the linkage (16r) relative to the operating member.

2. The bicycle derailleur according to claim 1, wherein
the operating member (15r) includes a base part (452) that is rotatably connected to the base member (12r), and an operating part (716) that pivots the linkage (16r).

3. The bicycle derailleur according to claim 1 or 2, wherein
the operating member (15r) has a pivot axis that is coincident with a pivot axis of the linkage (16r).

4. The bicycle derailleur according to anyone of claims 1 to 3, wherein
the adjustment mechanism (17r) includes a screw (665) that is threadedly engaged with one of the operating member (15r) and the linkage (16r) to contact the other of the operating member and the linkage in order to adjust the angular position of the linkage by advancing and retracting the screw.

5. The bicycle derailleur according to claim 2 and anyone of claims 1 to 4, wherein
the operating part (716) includes a first operating part (733) and a second operating part (728), with the first operating part being configured and arranged to pivot the linkage (16r) in a first rotational direction, and the second operating part being configured and arranged to pivot the linkage in a second rotational direction via a connecting member (704) that is connected to the linkage.

6. The bicycle derailleur according to claim 5, wherein
the connecting member includes a spring member (704) that is configured and arranged to urge the second operating part (728) in the first rotational direction.

7. The bicycle derailleur according to claim 5 or 6, wherein
the adjustment mechanism (17r) includes a screw (665) that is threadedly engaged with the linkage (16r) to contact the first operating part (733) of the operating member (15r) in order to adjust the angular position of the linkage by advancing and retracting the screw.

8. The bicycle derailleur according to claim 7, wherein
the screw member (665) is threadedly engaged with the linkage (16r), and contacts the first operating part (733) of the operating member (15r).

9. The bicycle derailleur according to anyone of claims 1 to 8, wherein
the base member (12r) includes an electric drive part (18r) with a motor (34) for driving the operating member (15r).

10. The bicycle derailleur according to anyone of claims 1 to 8, wherein
the operating member (15r) includes a gearshift cable attachment structure for rotating the operating member (15r) by a gearshift cable (820).
